(19) Europäisches Patentamt
European Patent Office
Office européen des brevets

(11) **EP 4 727 122 A1**

(12) **EUROPEAN PATENT APPLICATION**

(43) Date of publication:
**15.04.2026 Bulletin 2026/16**

(21) Application number: **24306652.9**

(22) Date of filing: **09.10.2024**

(51) International Patent Classification (IPC):
**H04N 19/122** (2014.01)    **H04N 19/159** (2014.01)
**H04N 19/176** (2014.01)    **H04N 19/186** (2014.01)
**H04N 19/593** (2014.01)

(52) Cooperative Patent Classification (CPC):
**H04N 19/122; H04N 19/159; H04N 19/176;
H04N 19/186; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
  MONTREAL, H2J 1G1 (CA)**
• **PURI, Saurabh
  SAINT-LAZARE, J7T 0P6 (CA)**
• **LE LEANNEC, Fabrice
  35830 BETTON (FR)**
• **NASER, Karam
  35250 MOUAZE (FR)**

(74) Representative: **Interdigital
Immeuble ZEN 2
845 A, avenue des Champs Blancs
35510 Cesson-Sévigné (FR)**

(54) **INTERACTION BETWEEN LUT-BASED IMPLICIT MTS AND CHROMA**

(57) In one implementation, methods and apparatuses for video decoding and video encoding are provided. For a component of a current block of the video, a single transform pair is selected from a plurality of transform pairs, wherein said selecting is based on a look up table associated with the component, and wherein the look up table indicates a mapping between (1) an intra prediction mode and a transform unit size associated with the component of the current block and (2) said single transform pair, transform coefficients of said component of the current block are inverse transformed based on said single transform pair, residuals are obtained for said component of the current block from said inverse transformed coefficients; and said component of the current block is reconstructed based on said residuals.

EP 4 727 122 A1

FIG. 20A

**Description**

TECHNICAL FIELD

The present embodiments generally relate to a method and an apparatus for transform coding in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In one implementation, a method of video decoding is provided. For a component of a current block of the video, a single transform pair is selected from a plurality of transform pairs, wherein said selecting is based on a look up table associated with the component, and wherein the look up table indicates a mapping between (1) an intra prediction mode and a transform unit size associated with the component of the current block and (2) said single transform pair, transform coefficients of said component of the current block are inverse transformed based on said single transform pair, residuals are obtained for said component of the current block from said inverse transformed coefficients; and said component of the current block is reconstructed based on said residuals.

In another aspect, a method of video encoding is provided. A single transform pair is selected from a plurality of transform pairs for a component of a current block, wherein said selecting is based on a look up table associated with the component, and wherein the look up table indicates a mapping between (1) an intra prediction mode and a transform unit size associated with the component of the current block and (2) said single transform pair; residuals for said component of the current block are obtained, said residuals are transformed for said component of the current block to obtain transform coefficients of said component of the current block based on said single transform pair; and said component of the current block is encoded based on said transform coefficients.

In another aspect, an apparatus for video decoding is provided, the apparatus comprises at least a memory and one or more processors, wherein said one or more processors are configured to: select a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair; inverse transform coefficients of said component of the current block based on said single transform pair; obtain residuals for said component of the current block from said inverse transformed coefficients; and decode said component of the current block based on said residuals.

In another aspect, an apparatus for video encoding is provided. The apparatus comprises at least a memory and one or more processors, wherein said one or more processors are configured to: select a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair; obtain residuals for said component of the current block; transform said residuals for said component of the current block to obtain transform coefficients of said component of the current block based on said single transform pair; and encode said component of the current block based on said transform coefficients.

In another aspect, a computer readable storage medium is provided, the medium having stored thereon a bitstream comprising coded data relative to a video encoded according to the method of video encoding described herein.

In another aspect, a non-transitory computer readable medium storing executable program instructions to cause a computer executing the program instructions to perform the methods mentioned above according to any one of the embodiments described herein is provided.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates the intra prediction modes in VVC.

FIG. 5 illustrates that the ISP (Intra Sub-Partition) tool divides luma intra-predicted blocks vertically or horizontally into 2 sub-partitions depending on the block size dimensions.

FIG. 6 illustrates that the ISP tool divides luma intra-predicted blocks vertically or horizontally into 4 sub-partitions depending on the block size dimensions.

FIG. 7 illustrates an example of transform set selection in the Look Up Table (LUT) for a given TU size and intra mode.

FIG. 8 illustrates a process of implicit MTS using mode-wise LUT for the decoder, according to an embodiment.

FIG. 9 illustrates a training process to select transform pairs based on RD costs, according to an embodiment.

FIG. 10 illustrates an example of transform pair ranking based on the RD-cost.

FIG. 11 illustrates an example of the effect of slope adjustment parameter "u", with on the left a model created with CCLM and on the right a model updated with slop adjustment.

FIG. 12 illustrates an example of spatial part of a convolutional filter.

FIG. 13 illustrates an example of a reference area ad its padding used to derive filter coefficients.

FIG. 14 illustrates an example of four Sobel based gradient patterns for GLM.

FIG. 15 illustrates an example of non-down sampled luma samples.

FIG. 16 illustrates an example of spatial samples used for GL-CCCM.

FIG. 17 illustrates an example of various downsampling filters used in cross-component models.

FIG. 18 illustrates an example of filter on samples of MM-CCLM/MM-CCCM.

FIG. 19A illustrates an example of a method 1900A for decoding a block of a video using LUT-based implicit MTS.

FIG. 19B illustrates an example of a method 1900B for encoding a block of a video using LUT-based implicit MTS.

FIG. 20A illustrates an example of a method 2000A for decoding a block of a video using LUT-based implicit MTS associated to a chroma component of the block, according to an embodiment.

FIG. 20B illustrates an example of a method 2000 for encoding a block of a video using LUT-based implicit MTS associated to a chroma component of the block, according to an embodiment.

FIG. 21A illustrates an example of a method 2100A for decoding a block of a video using LUT-based implicit MTS associated to a chroma component of the block for CCP modes, according to an embodiment.

FIG. 21B illustrates an example of a method 2100B for encoding a block of a video using LUT-based implicit MTS associated to a chroma component of the block for CCP modes, according to an embodiment.

FIG. 22 shows two remote devices communicating over a communication network in accordance with an example of the present principles.

FIG. 23 shows the syntax of a signal in accordance with an example of the present principles.

DETAILED DESCRIPTION

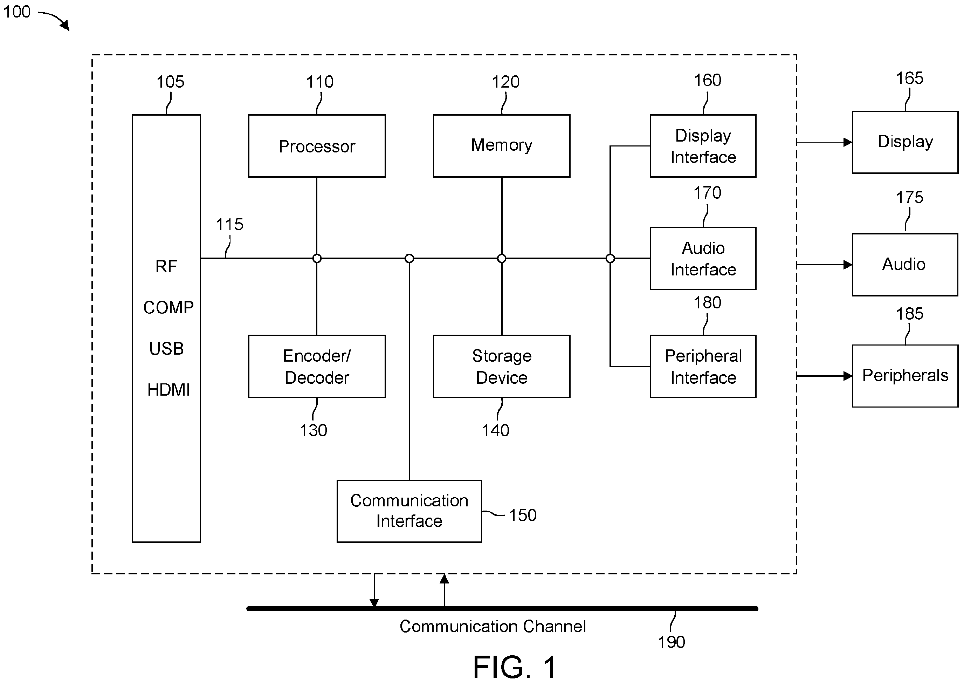

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

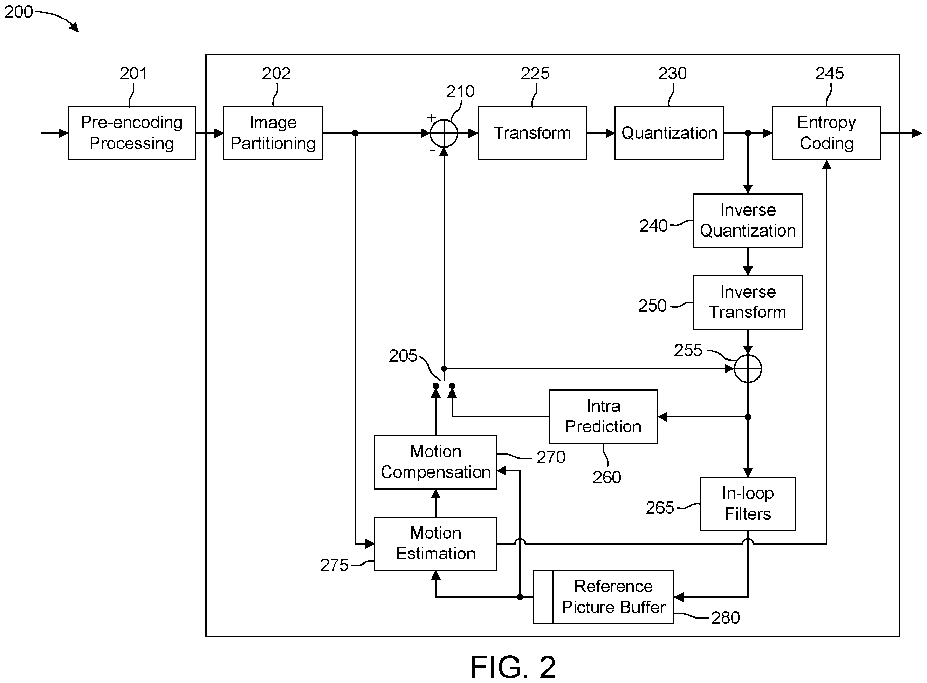

FIG. 2 illustrates an example of a block-based hybrid video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

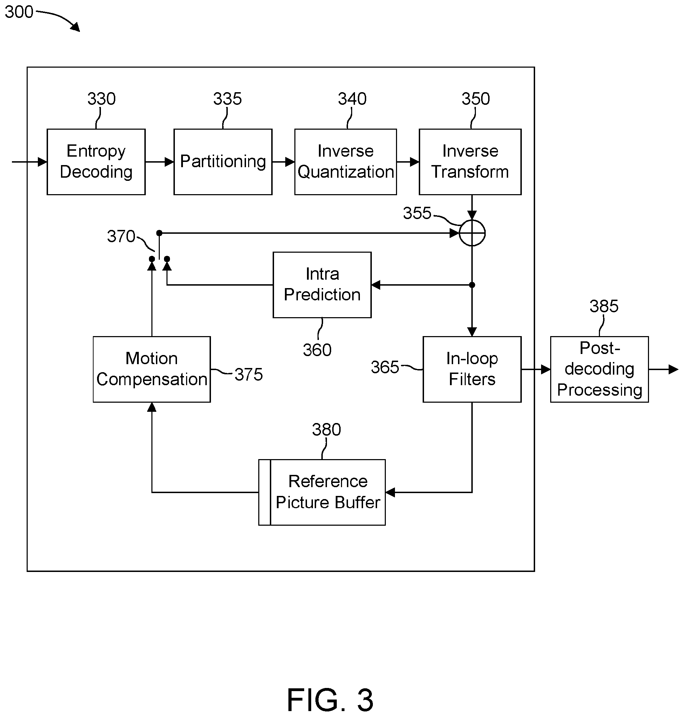

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

**Intra Prediction in ECM 10 (Enhanced Compression Model 10)**

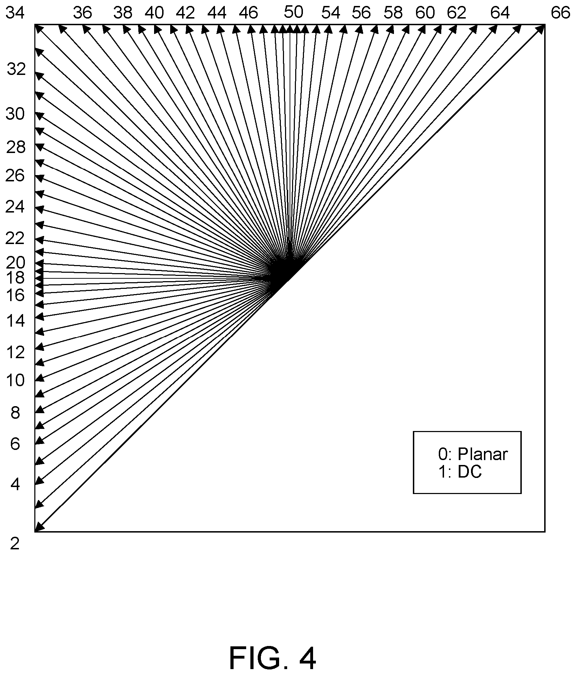

To capture the arbitrary edge directions presented in natural video, ECM features 65 directional intra prediction modes as in VVC. For predicting blocks with smoothly varying textures, VVC uses the PLANAR and DC modes. These 67 core intra prediction modes as shown in FIG. 4 apply for all block sizes and in both luma and chroma intra predictions.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

When DIMD (Decoder Side Intra Mode Derivation) is applied, up to five intra modes are derived from the reconstructed neighbor samples, and those five predictors are combined with the planar mode predictor with weights derived from the histogram of gradients.

In Intra Block Copy (IBC), the prediction is obtained from a reference block within the same picture indicated by a block vector.

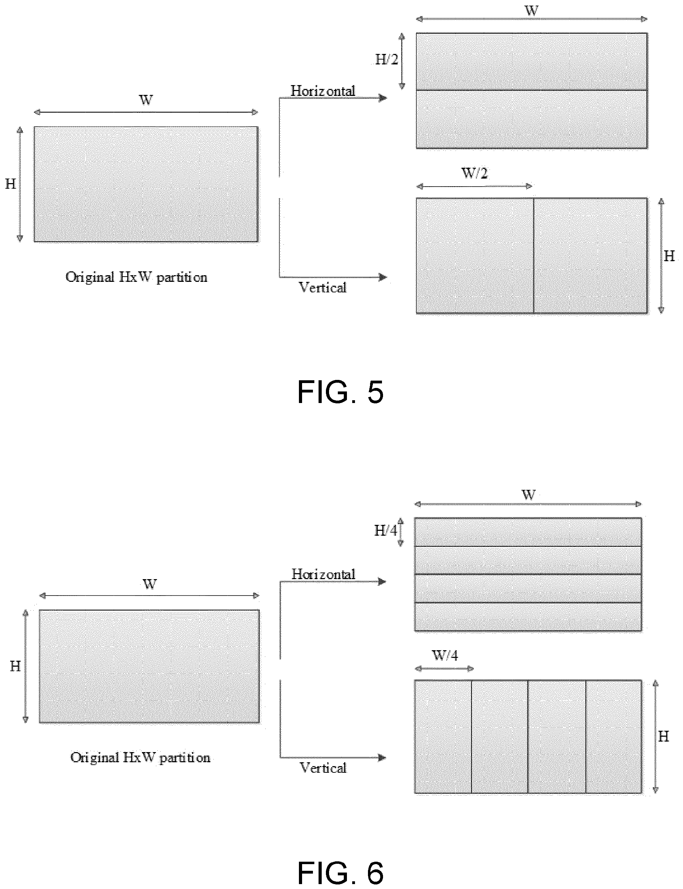

In ECM, a CU is used for prediction and transform processing without any further partitioning except in some special cases. For example, when Intra sub-partition (ISP) is enabled in ECM, an intra CU can contain multiple TUs (Transform Units). The ISP tool divides luma intra-predicted blocks vertically or horizontally into 2 or 4 sub-partitions depending on the block size dimensions, as shown in FIG. 5 and FIG. 6, respectively. All sub-partitions fulfill the condition of having at least 16 samples. For each of these sub-partitions, a residual signal is generated by entropy decoding the coefficients sent by the encoder and then inverse quantizing and inverse transforming them. Then, the sub-partition is intra predicted and finally the corresponding reconstructed samples are obtained by adding the residual signal to the prediction signal. Therefore, the reconstructed values of each sub-partition will be available to generate the prediction of the next one, which will repeat the process and so on. All sub-partitions of the same CU share the same intra mode.

**Explicit MTS in ECM**

In the VVC design, DST7 and DCT8 transform kernels are used in addition to DCT2. These kernels are used for intra and inter coding. Transform skip may also be used. In particular, in addition to the conventional type-2 DCT (DCT-2), alternate transform types, type-7 DST (DST7) and type-8 DCT (DCT8), are employed in VVC. In VVC, the primary transforms are specified as separable transforms. Five different transform pairs are supported, including (DCT2, DCT2) and four MTS (Multiple Transform Selection) mode combinations, i.e., (DST7, DST7), (DST7, DCT8), (DCT8, DST7) and (DCT8, DCT8). Note the "transform pair" refers to a pair of horizontal transform and vertical transform. The combination between DCT2 and DST7 (or DCT8) is not supported in VVC.

In VVC, there are two variants of MTS, called explicit MTS and implicit MTS. The explicit MTS can be applied to both intra and inter coded blocks, while the implicit MTS can be only used for intra coded blocks. In explicit MTS, the choice of DST-7/DCT-8 is indicated by explicit signaling of the transform type. In implicit MTS, the transform type is selected based on coded information that is known to both the encoder and decoder, and transform type signalling is not needed.

In ECM 10, additional primary transforms including DCT5, DST4, DST1, and identity transform (IDT) are employed. Also MTS sets are made dependent on the TU size and intra mode information. For blocks predicted using the IntraTMP mode, the DIMD process is used on the prediction block to derive an intra mode that is used for transform selection. Specifically, a horizontal gradient and a vertical gradient are calculated for each predicted sample to build a Histogram of Gradients (HoG). Then the intra prediction mode with the largest histogram amplitude values is used to determine the MTS transform pair set (a set of possible transform pairs).

The ECM explicit intra MTS LUT considers 16 different TU sizes, and for each TU size, 5 different classes are considered depending on intra mode information. For each class, 1, 4 or 6 different transform pairs are considered. The number of intra MTS candidates is adaptively selected (between 1, 4 and 6 MTS candidates) depending on the sum of absolute value of transform coefficients. The sum is compared against the two fixed thresholds to determine the total number of allowed MTS candidates:

$$\text{total number of allowed MTS candidates} = \begin{cases} 1, \text{if sum} \leq \text{th0} \\ 4, \text{if th0} < \text{sum} \leq \text{th1} \\ 6, \text{if sum} > \text{th1} \end{cases}$$

The transform pair index in the set is sent to the decoder using one, two or three bits depending on if the number of transform candidates is 1, 4 or 6, respectively.

Although a total of 80 (16 transform sizes times 5 classes) different classes are considered, some of these classes may share a same transform pair set. In ECM, there are 58 (less than 80) unique entries in the resultant look-up table (LUT).

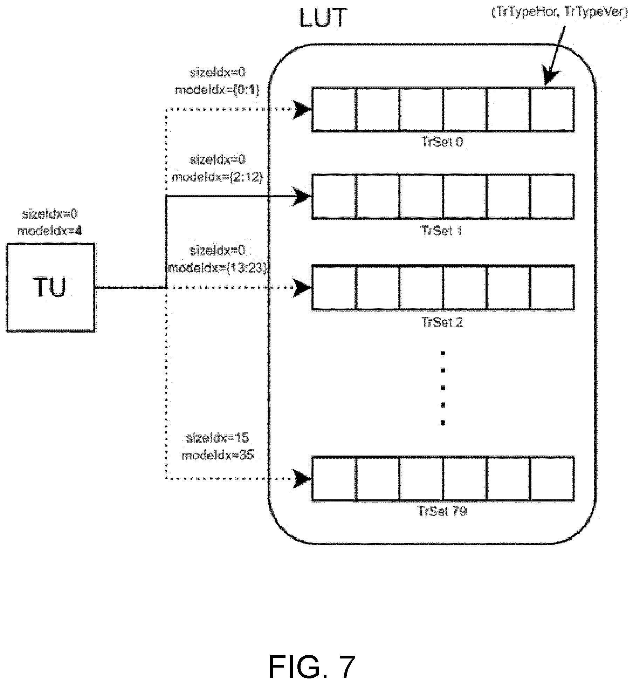

For angular intra modes, a joint symmetry over the TU shape and intra prediction mode is considered. Particularly, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP (Matrix-based Intra-picture Prediction), resulting in a total of 36 possible modes entries in the LUT. An example of transform set selection in the LUT for a given TU size and intra mode (modeIdx = 4, sizeIdx = 0) is illustraded in FIG. 7.

IDT may be applied for blocks that are 16x16 or smaller and have intra modes within the proximity of horizontal and vertical intra directions, where the proximity is defined by a threshold that depends on the block size. If the transform index is equal to 3 and the block satisfies the above condition, the horizontal and/or vertical identity transform is applied.

**Implicit MTS in ECM**

Implicit MTS is a tool in VVC that is a simpler version of the explicit MTS where a single pair of horizontal and vertical transforms is considered instead of multiple transform pairs. The benefits of the implicit MTS mode are its rapidity in an encoder compared to the explicit MTS mode, and its high compression gain when compared with the case where MTS is switched off.

In ECM, Implicit MTS is implemented by only considering DCT2 and DTS7 transform as in VVC. Specifically, if the block height nTbH or width nTbW is between 4 and 16, the vertical or horizontal transform is set to DST7, respectively. Otherwise DCT2 is selected.

$$trTypeHor = ( \, nTbW \geq 4 \ \ \&\& \ \ nTbW \leq 16 \, ) \, ? \, DST7 : DCT2$$

$$trTypeVer = ( \, nTbH \geq 4 \ \ \&\& \ \ nTbH \leq 16 \, ) \, ? \, DST7 : DCT2$$

The above description of explicit MTS and implicit MTS is used for deriving the transform for luma component of a block. In ECM, chroma components of a block always use DCT2 as a primary transform.

**Mode-wise LUT for implicit MTS**

As described above, in ECM, four new primary transforms, namely DCT5, DST4, DST1, and IDTR, are added to MTS, which was limited to DCT8 and DST7 in VVC. Although bringing a rate-distortion gain, introducing new transforms increases the encoder complexity as additional tests may be required during the rate-distortion optimization loop. To overcome this, implicit MTS can be employed where the best transform is inferred based on information known on the decoder side. However, introducing new transforms increases the solution space and makes implicit MTS more challenging compared to explicit MTS, where the best transform pair is signaled to the decoder. To improve the performance of implicit MTS, an implicit MTS method based on a mode-wise lookup table (LUT) can be used. This LUT infers the best transform pair for a given block from its intra prediction mode and TU size. The LUT is trained offline using statistics collected, e.g., from an exhaustive search on transforms performed in the encoder. This approach offers a flexible distribution of transform pairs between consecutive modes and allows combinations of other transforms with DCT2, which are not considered in the current ECM explicit MTS LUT. The LUT design method is applied to both the encoder and decoder.

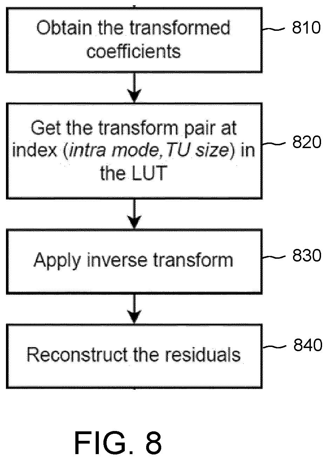

FIG. 8 illustrates the decoder-side process of the proposed implicit MTS using a mode-wise LUT. Unlike in ECM where explicit intra MTS uses a LUT to assign a transform pair set to a block based on its intra prediction mode and TU size, the mode-wise LUT assigns a single transform pair per block based on its intra prediction mode and TU size. This way, by assigning different transform pairs for consecutive intra modes, the LUT introduces diversity in the search space while avoiding the need for a transform selection process. Intra prediction modes may include planar, DC, MIP, angular modes, and wide angles. A fixed range of TU sizes is considered (e.g., 4 < width < 32 and 4 < height < 32).

In particular, transformed coefficients are obtained (810) and the transform pair is inferred (820) from the LUT using the intra prediction mode and the TU size of the residual block. Then, inverse transform is performed (830) on the transform coded block using the corresponding transform pair to reconstruct (840) the residual block.

On the encoder side, the transform pair is inferred from the LUT using the intra prediction mode and the TU size of the residual block. Then, the corresponding transform pair is applied to the residual block to produce the transformed residual block. Since the same intra prediction mode and TU size are known at the encoder and decoder, the same transform pair can be determined based solely on the intra prediction mode and the TU size in the same manner at the encoder and decoder, and no signaling overhead is required for conveying the transform pair information from the encoder to decoder.

In a variant, only the TU size is used to derive the transform pair in the LUT. Alternatively, only the intra prediction mode is used to derive the transform pair in the LUT.

In the ECM, DIMD and TIMD (Template-based Intra Mode Derivation) can be used to derive an intra prediction mode from already coded samples. The original purpose of these tools is to offer the option to avoid signaling the intra mode to the decoder. However, they can also be used to obtain an intra mode index in scenarios where it is not available, for instance, IntraTMP, IBC, and inter blocks. Therefore, those modes can use tools that rely on a LUT with intra-mode as input, like intra-explicit MTS or LFNST. The mode obtained using this approach is denoted as a virtual intra mode. As a variant, the proposed method can be applied to IntraTMP, IBC, and inter blocks using a virtual intra prediction mode.

**Designing a LUT based on offline transform analysis**

The ECM uses a LUT for intra explicit MTS containing transform sets shared across fixed ranges of intra modes. However, the ECM explicit MTS LUT does not include any transform pair that combines DCT2 with a non-DCT2 transform. However, such combinations might be suitable when the residual block is obtained from a horizontal or vertical intra-prediction. Generally, residual samples have larger absolute values if they are farther away from the reference samples. Therefore, an increasing transform along the intra prediction direction (such as DST7) and a constant transform along the opposite intra prediction direction (such as DCT2) might better catch the residual statistics.

To address this issue, a new LUT is designed dedicated to intra implicit MTS. To create the mode-wise LUT based on transform pairs statistics, an offline search is performed using intra explicit MTS on a fixed video sequence dataset. The best transform pair per size/mode (i.e., the transform pair with the highest number of occurrences during the search) is selected as the candidate in the LUT. No index is sent during the search to avoid signaling bias, and only encoder statistics are considered.

In a variant, an index is slowly introduced during the learning process and the rate at which the index is introduced is based on a parameter (also known as annealing rate). This allows the encoder to start learning without any bias to allow more randomness and slowly reduce the randomness. This method is also known as simulated annealing and is used for solving optimization problems.

In a variant, an exhaustive search based on all possible transform combinations is performed to remove the bias from the current explicit MTS LUT. It also enables combinations of non-DCT2 and DCT2 transforms.

In a variant, other trigonometric transforms (i.e., other than DCT5, DST4, DST1, DCT8, DST7, and DCT2) are introduced during the exhaustive search and can be used as candidate in the LUT.

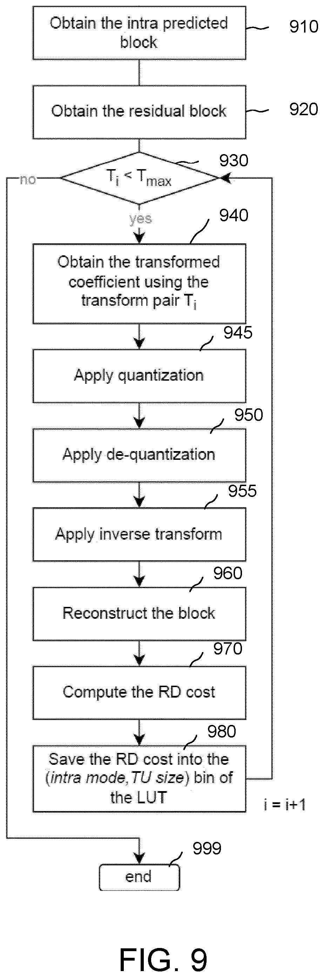

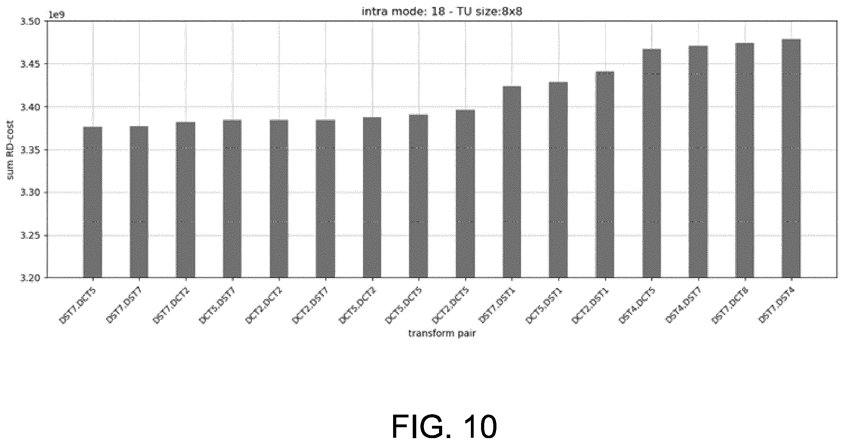

FIG. 9 illustrates the training process for one block. In this embodiment, the candidate in the LUT is selected based on the rate-distortion (RD) cost of transforms during the search. For each block of the training dataset, we collect the RD cost and record it in the corresponding intra prediction mode and TU size bin in the LUT (980). In particular, the intra predicted block is obtained (910) and the residual block is obtained (920) for the block. $T_{max}$ corresponds to the last transform pair to be tested during the exhaustive search. For any transform pair Ti to be tested (930), the transform coefficient using the transform pair Ti is obtained (940) and quantized (945). De-quantization (950) and inverse transform (955) are applied. The block is reconstructed (960) and the RD cost is computed (970). The processing of one block ends (999) after the RD cost is saved in the corresponding intra prediction mode and TU size bin in the LUT (980). At the end (999) of the training process (after all blocks from the training dataset have been processed), the pair with the lowest RD cost at each LUT bin is selected as the candidate in the mode-wise LUT. It allows collecting statistics on transform pairs that are not selected during the search. An example of transform pair ranking based on the RD-cost is given in FIG. 10.

As described above, implicit MTS is made dependent on the intra mode and the size of the coding unit (CU). This tool is particularly useful as it prevents the encoder from performing a search among several transform candidates and signal the best one. Both the size of the CU and the intra mode are used as input of the lookup-table (LUT) to infer the transform primary pair at both the encoder and the decoder sides.

This tool is initially dedicated to luma, but it can also be applied to the chroma components. However, the chroma residuals can present different characteristics than the luma component, which can lead to bad interaction if the LUT-based Implicit MTS remains unchanged, that is if the same LUT is used both for luma and chroma components. To tackle this, embodiments described herein provide for adapting LUT-based implicit MTS to the case of chroma transform coding.

In the following, CCP modes refers to the CCLM mode, CCCM mode, GLM mode and their variants and non-CCP mode refers to conventional chroma intra prediction mode or fusion of chroma intra prediction mode.

The objective of CCP tools is to leverage the correlation between the different components of the signal by predicting the chroma components from the luma component.

**Multi-model LM (MMLM)**

CCLM included in VVC is extended by adding three Multi-model LM (MMLM) modes (JVET-D0110). In each MMLM mode, the reconstructed neighboring samples are classified into two classes using a threshold which is the average of the luma reconstructed neighboring samples. The linear model of each class is derived using the Least-Mean-Square (LMS) method. For the CCLM mode, the LMS method is also used to derive the linear model. A slope adjustment to is applied to cross-component linear model (CCLM) and to Multi-model LM prediction. The adjustment is tilting the linear function which maps luma values to chroma values with respect to a center point determined by the average luma value of the reference samples.

**Slope adjustment of CCLM**

CCLM uses a model with 2 parameters to map luma values to chroma values. The slope parameter "a" and the bias parameter "b" define the mapping as follows:

$$\text{chromaVal} = a * \text{lumaVal} + b$$

An adjustment "u" to the slope parameter is signaled to update the model to the following form:

$$\text{chromaVal} = a' * \text{lumaVal} + b'$$

where a' = a + u, b' = b - u * yr.

With this selection the mapping function is tilted or rotated around the point with luminance value yr. The average of the reference luma samples used in the model creation as yr in order to provide a meaningful modification to the model.

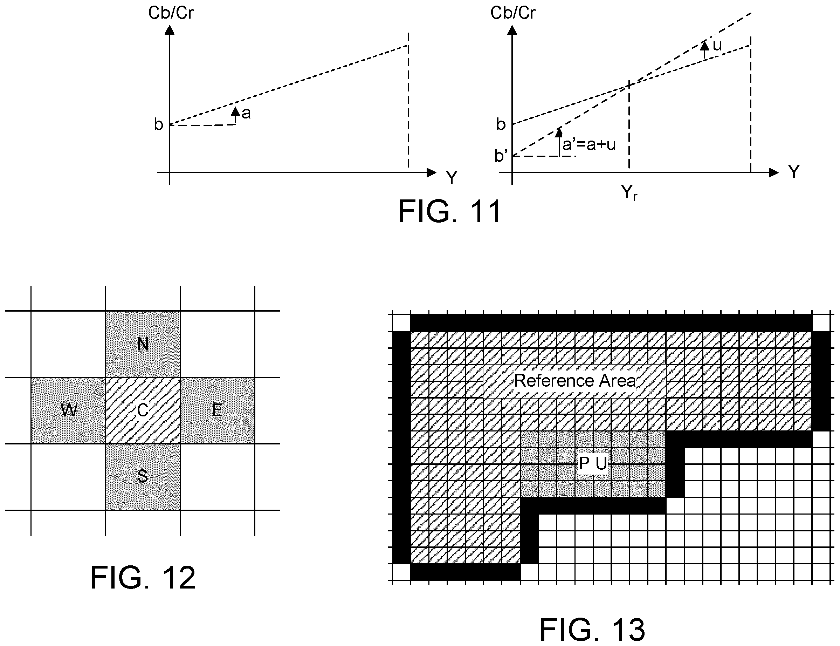

FIG. 11 illustrates the process.

Implementation

Slope adjustment parameter is provided as an integer between -4 and 4, inclusive, and signaled in the bitstream. The unit of the slope adjustment parameter is 1/8th of a chroma sample value per one luma sample value (for 10-bit content).

Adjustment is available for the CCLM models that are using reference samples both above and left of the block ("LM_CHROMA IDX" and "MMLM_CHROMA_IDX"), but not for the "single side" modes. This selection is based on coding efficiency vs. complexity trade-off considerations.

When slope adjustment is applied for a multimode CCLM model, both models can be adjusted and thus up to two slope updates are signaled for a single chroma block.

Encoder approach

The proposed encoder approach performs an SATD based search for the best value of the slope update for Cr and a similar SATD based search for Cb. If either one results as a non-zero slope adjustment parameter, the combined slope adjustment pair (SATD based update for Cr, SATD based update for Cb) is included in the list of RD checks for the TU.

**Fusion of chroma intra prediction modes**

In ECM, two chroma intra prediction signals can be fused together. One of the two chroma intra prediction signals is predicted using one of the DM modes, DIMD chroma mode and the four default modes (non-LM mode). The other chroma intra prediction signal is predicted using cross-component linear prediction modes (LM mode). Two different methods are supported.

In the first method, the LM mode can be either MM-CCLM or MM-CCCM, and the final predictor is derived as follows:

$$pred_C(i,j) = (w0 \times pred0(i,j) + w1 \times pred1(i,j) + (1 \ll (shift - 1))) \gg shift$$

where $pred0(i, j)$ is the predictor obtained by applying the non-LM mode, $pred1(i, j)$ is the predictor obtained by applying the LM mode and $pred_C(i, j)$ is the final predictor of the current chroma block. The two weights, w0 and w1 are determined by the intra prediction mode of adj acent chroma blocks and shift is set equal to 2. Specifically, when the above and left adjacent blocks are both coded with LM modes, $\{w0, w1\}=\{1, 3\}$; when the above and left adjacent blocks are both coded with non-LM modes, $\{w0, w1\}=\{3, 1\}$; otherwise, $\{w0, w1\}=\{2, 2\}$. Two template costs are calculated by fusing the angular chroma prediction with MM-CCLM or MM-CCCM, respectively, and the one of the two CCPs which provides a smaller template cost is utilized to derive $pred1$.

In the second method, the LM mode can be either MMLM or CCLM mode, and the final predictor is derived as follows:

$$pred_C(i,j) = \alpha_0 \times pred0(i,j) + \alpha_1 \times rec'_L(i,j) + \alpha_2 \times \beta$$

where $pred0(i, j)$ is the predictor obtained by applying the non-LM mode, $rec'_L(i,j)$ is the set of downsampled reconstructed luma samples at co-located positions and $pred_C(i, j)$ is the final predictor of the current chroma block. $\beta$ is a fixed value and is set equal to 512 for 10-bit content. The three weights, $\alpha_0, \alpha_1$ and $\alpha_2$ are derived from the adjacent luma and chroma samples using the same LDL derivation method as in CCCM.

For the syntax design, one index is signaled to indicate whether fusion is applied, and which method is used. It is noted that for I slices, the non-LM mode can be DM mode, DIMD chroma mode and the four default modes. For non-I slices, only DIMD chroma mode is allowed to be fused with LM modes.

| Index value | Name |
|---|---|
| 0 | No fusion |
| 1 | First method |

(continued)

| Index value | Name |
|---|---|
| 2 | Second method with CCLM |
| 3 | Second method with MMLM |

**Convolutional cross-component intra prediction model**

In this method convolutional cross-component model (CCCM) is applied to predict chroma samples from reconstructed luma samples in a similar spirit as done by the current CCLM modes. As with CCLM, the reconstructed luma samples are downsampled to match the lower resolution chroma grid when chroma sub-sampling is used. Similar to CCLM top, left or top and left reference samples are used as templates for model derivation.

Also, similarly to CCLM, there is an option of using a single model or multi-model variant of CCCM. The multi-model variant uses two models, one model derived for samples above the average luma reference value and another model for the rest of the samples (following the spirit of the CCLM design). Multi-model CCCM mode can be selected for PUs which have at least 128 reference samples available.

Convolution filter

The convolutional 7-tap filter consist of a 5-tap plus sign shape spatial component, a nonlinear term and a bias term. The input to the spatial 5-tap component of the filter consists of a center (C) luma sample which is collocated with the chroma sample to be predicted and its above/north (N), below/south (S), left/west (W) and right/east (E) neighbors as illustrated in FIG. 12.

The nonlinear term P is represented as power of two of the center luma sample C and scaled to the sample value range of the content $P = ( C*C + midVal ) >> bitDepth$. That is, for 10-bit content it is calculated as $P = ( C*C + 512 ) >> 10$. The bias term B represents a scalar offset between the input and output (similarly to the offset term in CCLM) and is set to middle chroma value (512 for 10-bit content). Output of the filter is calculated as a convolution between the filter coefficients ci and the input values and clipped to the range of valid chroma samples:

$$predChromaVal = c0C + c1N + c2S + c3E + c4W + c5P + c6B$$

Calculation of filter coefficients

The filter coefficients ci are calculated by minimizing MSE between predicted and reconstructed chroma samples in the reference area. FIG. 13 illustrates the reference area which consists of 2 or 6 lines of chroma samples above and left of the PU. Whether to use 6 lines or 2 lines of neighboring samples to derive the CCCM model parameters in the single model CCCM is determined by a template cost. Similarly, for the multi-model CCCM mode, the two candidates use 6 lines neighboring luma samples or luma samples collocated to the current chroma block to derive mean values which separate samples into two groups. The cost is derived by applying the candidate CCP (either 2 or 6 lines) on a template, calculating the sum of absolute difference (SAD) between CCP predicted samples and reconstructed samples in the template.

Reference area extends one PU width to the right and one PU height below the PU boundaries. Area is adjusted to include only available samples. The extensions to the area shown in black are needed to support the "side samples" of the plus shaped spatial filter and are padded when in unavailable areas.

The MSE minimization is performed by calculating autocorrelation matrix for the luma input and a cross-correlation vector between the luma input and chroma output. Autocorrelation matrix is LDL decomposed and the final filter coefficients are calculated using back-substitution. The process follows roughly the calculation of the ALF filter coefficients in ECM; however, LDL decomposition was chosen instead of Cholesky decomposition to avoid using square root operations.

The autocorrelation matrix is calculated using the reconstructed values of luma and chroma samples. These samples are full range (e.g. between 0 and 1023 for 10-bit content) resulting in relatively large values in the autocorrelation matrix. This requires high bit depth operation during the model parameters calculation. It is proposed to remove fixed offsets from luma and chroma samples in each PU for each model. This is driving down the magnitudes of the values used in the model creation and allows reducing the precision needed for the fixed-point arithmetic. As a result, 16-bit decimal precision is proposed to be used instead of the 22-bit precision of the original CCCM implementation.

Reference sample values just outside of the top-left corner of the PU are used as the offsets (offsetLuma, offsetCb and offsetCr) for simplicity. The samples values used in both model creation and final prediction (i.e., luma and chroma in the reference area, and luma in the current PU) are reduced by these fixed values, as follows:

$$C' = C - \text{offsetLuma}$$

$$N' = N - \text{offsetLuma}$$

$$S' = S - \text{offsetLuma}$$

$$E' = E - \text{offsetLuma}$$

$$W' = W - \text{offsetLuma}$$

$$P' = \text{nonLinear}(C')$$

$$B = \text{midValue} = 1 << (\text{bitDepth} - 1)$$

and the chroma value is predicted using the following equation, where offsetChroma is equal to offsetCr and offsetCb for Cr and Cb components, respectively:

$$\text{predChromaVal} = c0C' + c1N' + c2S' + c3E' + c4W' + c5P' + c6B + \text{offsetChroma}$$

In order to avoid any additional sample level operations, the luma offset is removed during the luma reference sample interpolation. This can be done, for example, by substituting the rounding term used in the luma reference sample interpolation with an updated offset including both the rounding term and the offsetLuma. The chroma offset can be removed by deducting the chroma offset directly from the reference chroma samples. As an alternative way, impact of the chroma offset can be removed from the cross-component vector giving identical result. In order to add the chroma offset back to the output of the convolutional prediction operation the chroma offset is added to the bias term of the convolutional model.

The process of CCCM model parameter calculation requires division operations. Division operations are not always considered implementation friendly. The division operations are replaced with multiplication (with a scale factor) and shift operation, where scale factor and number of shifts are calculated based on denominator similar to the method used in calculation of CCLM parameters.

Gradient Linear Model

For YUV 4:2:0 color format, a gradient linear model (GLM) method can be used to predict the chroma samples from luma sample gradients. Two modes are supported: a two-parameter GLM mode and a three-parameter GLM mode.

Compared with the CCLM, instead of down-sampled luma values, the two-parameter GLM utilizes luma sample gradients to derive the linear model. Specifically, when the two-parameter GLM is applied, the input to the CCLM process, i.e., the down-sampled luma samples L, are replaced by luma sample gradients G. The other parts of the CCLM (e.g., parameter derivation, prediction sample linear transform) are kept unchanged:

$$C = \alpha \cdot G + \beta$$

In the three-parameter GLM, a chroma sample can be predicted based on both the luma sample gradients and down-sampled luma values with different parameters. The model parameters of the three-parameter GLM are derived from 6 rows and columns adjacent samples by the LDL decomposition based MSE minimization method as used in the CCCM:

$$C = \alpha_0 \cdot G + \alpha_1 \cdot L + \alpha_2 \cdot \beta$$

For signaling, when the CCLM mode is enabled to the current CU, one flag is signaled to indicate whether GLM is enabled for both Cb and Cr components; if the GLM is enabled, another flag is signaled to indicate which of the two GLM modes is selected, and one syntax element is further signaled to select one of 4 gradient filters for the gradient calculation.

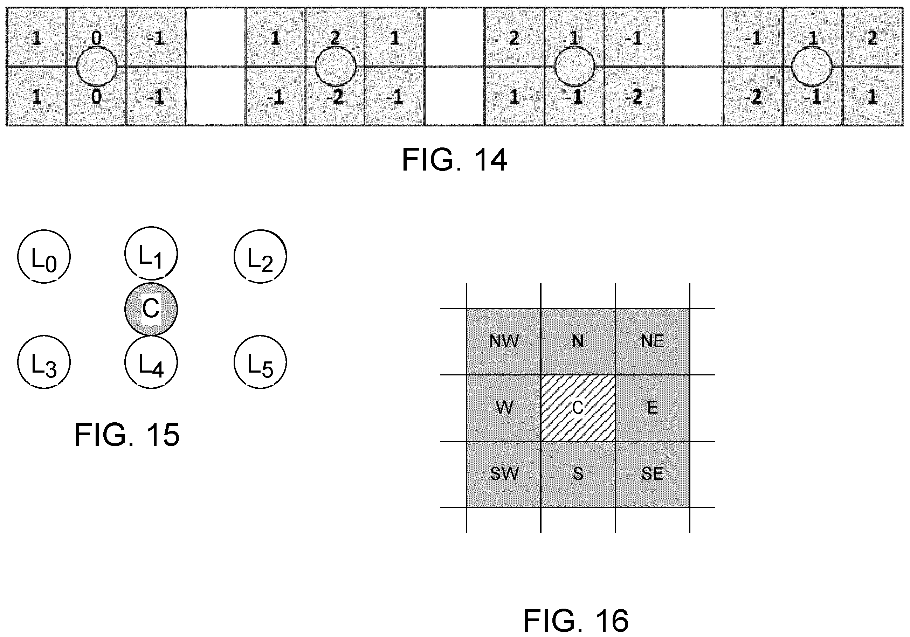

Four gradient filters are enabled for the GLM, as illustrated in FIG. 14.

CCCM signaling

Usage of the mode is signaled with a CABAC coded PU level flag. One new CABAC context was included to support this. When it comes to signaling, CCCM is considered a sub-mode of CCLM. That is, the CCCM flag is only signaled if intra prediction mode is LM_CHROMA.

CCCM using non-downsampled luma samples

CCCM mode with 3x2 filter using non-downsampled luma samples is used, which consists of 6-tap spatial terms, four nonlinear terms and a bias term. The 6-tap spatial terms correspond to 6 neighboring luma samples (i.e., L0, L1, ..., L5) around the chroma sample (i.e., C) to be predicted, the four non-linear terms are derived from the samples L0, L1, L2, and L3 as shown in FIG. 15:

$$C = \sum_{i=0}^{5} \alpha_i \cdot (L_i - \text{offsetLuma}) + \sum_{i=6}^{9} \alpha_i \cdot (((L_{i-4} - \text{offsetLuma})^2 + \beta)$$

$$\gg bitDepth) + \alpha_{10} \cdot \beta + \text{offsetChroma}$$

where $\alpha_i$ is the coefficient, $\beta$ is the offset. Same to the existing CCCM design, up to 6 lines/columns of chroma samples above and left to the current CU are applied to derive the filter coefficients. The filter coefficients are derived based on the same LDL decomposition method used in CCCM. The proposed method is signaled as an additional CCCM model besides the existing one, when the CCCM is selected, one single flag is signaled and used for both two chroma components to indicate whether the default CCCM model or the proposed CCCM model is applied. Additionally, SPS signaling is introduced to indicate whether the CCCM using non-downsampled luma samples is enabled.

Gradient and location based convolutional cross-component model (GL-CCCM)

This method maps luma values into chroma values using a filter with inputs consisting of one spatial luma sample, two gradient values, two location information, a nonlinear term, and a bias term. The GL-CCCM method uses gradient and location information instead of the 4 spatial neighbor samples used in the CCCM filter. The GL-CCCM filter used for the prediction is:

$$predChromaVal = c_0 C + c_1 G_y + c_2 G_x + c_3 Y + c_4 X + c_5 P + c_6 B$$

Where $G_y$ and $G_x$ are the vertical and horizontal gradients, respectively, and are calculated as follows with spatial neighbor samples for gradients calculation shown on FIG. 16:

$$G_y = (2N + NW + NE) - (2S + SW + SE)$$

$$G_x = (2W + NW + SW) - (2E + NE + SE)$$

Moreover, the Y and X are the spatial coordinates of the center luma sample.

The rest of the parameters are the same as CCCM tool. The reference area for the parameter calculation is the same as CCCM method.

The usage of the mode is signaled with a CABAC coded PU level flag. When it comes to signaling, GL-CCCM is considered a sub-mode of CCCM. That is, the GL-CCCM flag is only signaled if original CCCM flag is true.

Similar to the CCCM, GL-CCCM tool has 6 modes for calculating the parameters: Single-model GL-CCCM from above and left templates, Single-model GL-CCCM from above template, Single-model GL-CCCM from left template, Multi-model GL-CCCM from above and left templates, Multi-model GL-CCCM from above template, Multi-model GL-CCCM from left template

The encoder performs SATD search for the 6 GL-CCCM modes along with the existing CCCM modes to find the best candidates for full RD tests.

CCCM with multiple donwsampling filters

Multiple downsampling filters are applied to a group of reconstructed luma samples in a CCCM. The linear combination of these downsampled reconstructed samples is multiplied by derived filter coefficients to form the final chroma predictor. The horizontal or vertical location of the center luma sample are also considered in the tested model. The cross-component models shown below are tested as additional CCCM modes with a mode index signaled in the bitstream:

Model 1: predChroma = c0 * H(C) + c1 * G1(C) + c2 * G2(C) + c3 * G3(C) + c4 * P(H(C)) + c5 * P(G1(C)) + c6 * P(G2(C)) + c7 * X + c8 * Y + c9 * B Model 2: predChroma = c0 * H(C) + c1 * H(W) + c2 * H(E) + c3 * G1(C) + c4 * G1(W) + c5 * G1(E) + c6 * P(H(C)) + c7 * P(H(W)) + c8 * P(H(E)) + c9 * X + c10 * B Model 3: predChroma = c0 * H(C) + c1 * H(NE) + c2 * H(SW) + c3 * G3(C) + c4 * G3(NE) + c5 * G3(SW) + c6 * P(H(C)) + c7 * P(H(NE)) + c8 * P(H(SW)) + c9 * Y + c10 * B

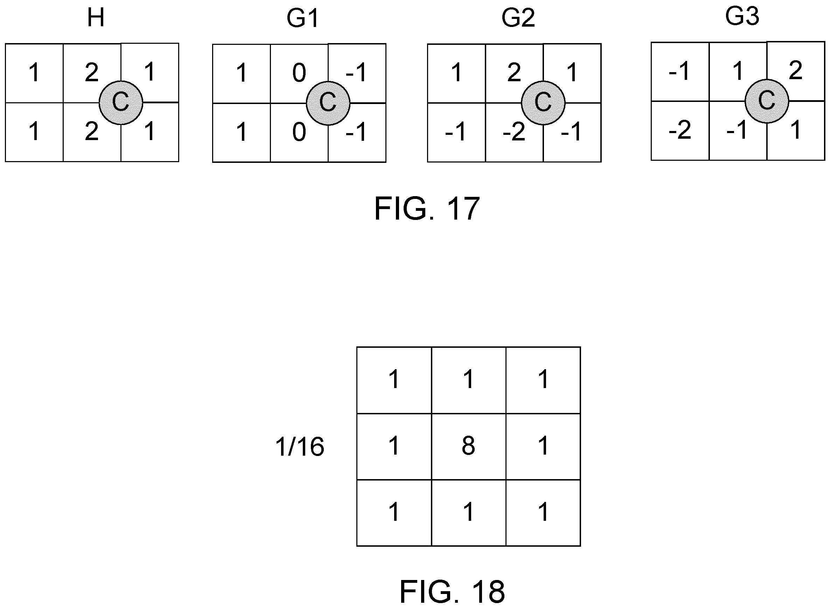

where $H(\cdot)$, $G1(\cdot)$, $G2(\cdot)$, $G3(\cdot)$ are various downsampling filters as indicated in FIG. 17, C denotes the current chroma sample position, and N, S, W, E, NE, SW are the positions around C, $c_i$ are filter coefficients, P and B are nonlinear term and bias term, and X and Y are the horizontal and vertical locations of the center luma sample with respect to the top-left coordinates of the block.

**Local boosting cross-component prediction (LB-CCP)**

Prediction samples of MM-CCLM/MM-CCCM can be filtered with neighboring samples. As shown in FIG. 18, a $3\times3$ low-pass filter is applied to filter prediction samples generated by MM-CCLM/MM-CCCM. For a sample at a top/left boundary, the filtering window may involve neighboring reconstructed samples. For inner samples, the filtering window only involves prediction samples, which may be padded. A flag is signaled to indicate whether filtering is applied or not for a block coded with MM-CCLM/MM-CCCM.

**Cross-component prediction (CCP) merge (a.k.a non-local CCP) mode**

For chroma coding, a flag is signaled to indicate whether CCP mode (including the CCLM, CCCM, GLM and their variants) or non-CCP mode (conventional chroma intra prediction mode, fusion of chroma intra prediction mode) is used. If the CCP mode is selected, one more flag is signaled to indicate how to derive the CCP type and parameters, i.e., either from a CCP merge list or signaled/derived on-the-fly. a CCP merge candidate list is constructed from the spatial adjacent, spatial non-adjacent, or history-based candidates. After including these candidates, default models are further included to fill the remaining empty positions in the merge list. In order to remove redundant CCP models in the list, pruning operation is applied. After constructing the list, the CCP models in the list are reordered depending on the SAD costs, which are obtained using the neighboring template of the current block. More details are described below.

Spatial adjacent and non-adjacent candidates

The positions and inclusion order of the spatial adjacent and non-adjacent candidates are the same as those defined in ECM for regular inter merge prediction candidates.

History-based candidates

A history-based table is maintained to include the recently used CCP models, and the table is reset at the beginning of each CTU row. If the current list is not full after including spatial adjacent and non-adjacent candidates, the CCP models in the history-based table are added into the list.

Default candidates

CCLM candidates with default scaling parameters are considered, only when the list is not full after including the spatial adjacent, spatial non-adjacent, or history-based candidates. If the current list has no candidates with the single model CCLM mode, the default scaling parameters are {0, 1/8, -1/8, 2/8, -2/8, 3/8, -3/8, 4/8, -4/8, 5/8, -5/8, 6/8}. Otherwise, the default scaling parameters are {0, the scaling parameter of the first CCLM candidate + {1/8, -1/8, 2/8, -2/8, 3/8, - 3/8, 4/8, -4/8, 5/8, -5/8, 6/8}}. The offset parameter is derived according to the default scaling parameter, average neighboring reconstructed luma sample value, and average neighboring reconstructed Cb/Cr sample value.

A flag is signaled to indicate whether the CCP merge mode is applied or not. If CCP merge mode is applied, an index is signaled to indicate which candidate model is used by the current block. In addition, CCP merge mode is not allowed for the current chroma coding block when the current CU is coded by intra subpartitions (ISP) with single tree, or the current chroma coding block size is less than or equal to 16.

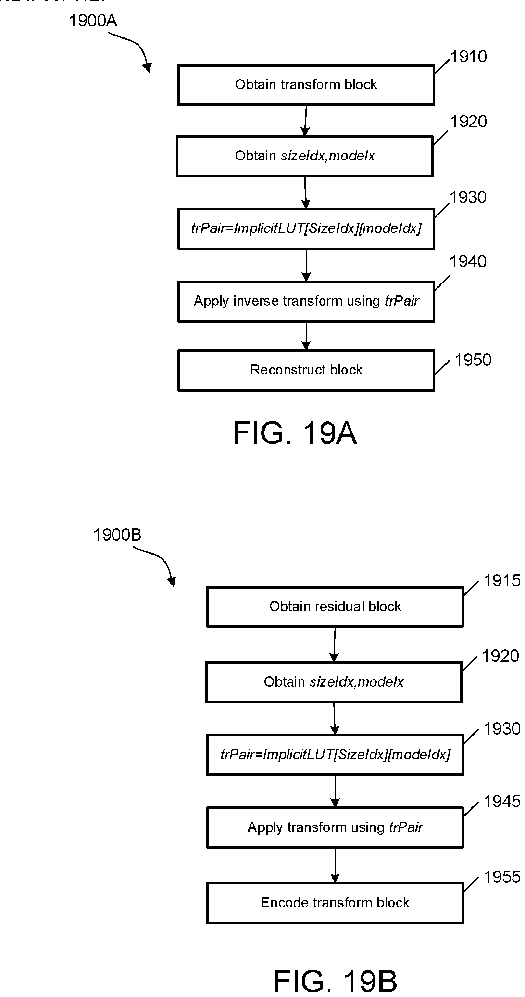

In LUT-based implicit MTS, both a size index (sizeIdx) and an intra mode index (modeIdx) are computed to infer a transform pair from the LUT. FIG. 19A and FIG. 19B illustrates examples of flowchart describing methods 1900A and 1900B for trPair derivation using LUT-based implicit MTS at a decoder (FIG. 19A) and an encoder (FIG. 19B).

On the decoding side, at 1910, a transform block for a current block to decode is obtained. The transform block comprises transformed coefficients that are for example obtained by entropy decoding a bitstream followed by dequantization. Eventually a secondary transform (e.g. non-separable transform) may be applied to the dequantized coefficients. At 1920, the *sizeIdx and modeIdx* for the current block to decode are obtained. For instance, the sizeIdx can be obtained by mapping the size of the block to an index using the following table:

| Block size | 4x4 | 4x8 | 4x16 | 4x32 | 8x4 | 8x8 | 8x16 | 8x32 |
|---|---|---|---|---|---|---|---|---|
| *sizeIdx* | 0 | 1 | 2 | 3 | 4 | 5 | 6 | 7 |
| Block size | 16x4 | 16x8 | 16x16 | 16x32 | 32x4 | 32x8 | 32x16 | 32x32 |
| *sizeIdx* | 8 | 9 | 10 | 11 | 12 | 13 | 14 | 15 |

The intra mode *modeIdx* can be obtained directly from the directional intra mode or by computing a virtual intra prediction mode (VIPM) using the histogram of gradient (HoG) computed on the reconstructed pixels in the top-left template of the current block.

Then, at 1930, both the *sizeIdx and modeIdx* are passed through a LUT ImplicitLUT to infer a primary transform pair *trPair*. At 1940, the trPair is then used to perform the inverse transform step to obtain the residuals for the current block. At 1950, the current block is reconstructed using the reconstructed residuals after inverse transform and a prediction block of the current block obtained for example using the intra prediction mode of the current block.

On the encoding side, at 1915, a residual block for a current block to encode is obtained. The residual block is for example obtained as the difference between the current block and the prediction of the current block by the intra prediction mode determined for the current block. In a similar manner as in the decoding side, at 1920, the *sizeIdx and modeIdx* for the current block to encode are obtained. For instance, the *sizeIdx* can be obtained by mapping the size of the block to an index using the table above. The intra mode *modeIdx* can be obtained directly from the directional intra mode or by computing a virtual intra prediction mode (VIPM) using the histogram of gradient (HoG) computed on the reconstructed pixels in the top-left template of the current block. Then, at 1930, both the *sizeIdx and modeIdx* are passed through a LUT ImplicitLUT to infer a primary transform pair *trPair.*

At 1945, the *trPair* is then used to perform the transform step to obtain the transformed coefficients from the residuals for the current block. A secondary transform may eventually be performed on the transformed coefficient. At 1955, the transform block is encoded. That is, the transformed coefficients are quantized, and entropy coded.

The process for deriving the trPair descried above (1920, 1930) is dedicated to luma. In the ECM, DCT2 is always used for the chroma components. The chroma components may benefit from the usage of a wider set of transforms. However, LUT-based implicit MTS has originally been designed for the luma component. Embodiments described herein provide adaptations of the LUT-based implicit MTS to be applied to the chroma components.

**Specific LUT for chroma**

In an embodiment, it is proposed to use a second LUT dedicated to the chroma components, denoted as ImplicitLUT$_{CbCr}$. The ImplicitLUT$_{CbCr}$ have the same design as the luma implicit MTS LUT, denoted as ImplicitLUT$_Y$, i.e., a single transform pair trPair is assigned to a combination of modeIdx and sizeIdx. However, the structure can be different, e.g., a different intra modes range or blocks sizes range can be considered for the ImplicitLUT$_{CbCr}$.

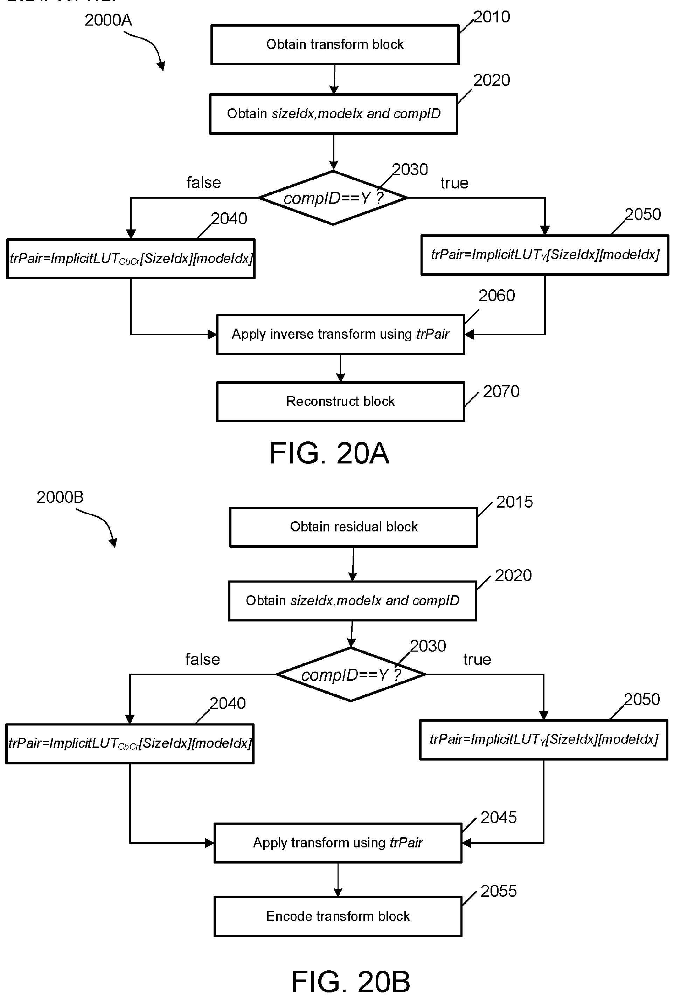

The process of using a chroma-dedicated LUT for LUT-based implicit MTS is illustrated in FIG. 20A and FIG. 20B. The process of FIG. 20B can be used in the encoding method described in relation with FIG. 2. The process of FIG. 20A can be used in the decoding method described in relation with FIG. 3.

On the decoding side, at 2010, a transform block for the current block to decode is obtained. The transform block comprises transformed coefficients that are for example obtained by entropy decoding a bitstream followed by dequantization. Eventually a secondary transform (e.g. non-separable transform) may be applied to the dequantized coefficients. At 2020, the component ID *compID* of the block, indicating whether the block is luma (Y) or chroma (CbCr), is obtained in addition to *sizeIdx and modeIdx* which are obtained similarly as in the process FIG. 19A. At 2030, it is checked whether the block is luma or not. If the block is luma (i.e., *compID = Y*), at 2050, the *trPair* is derived from the luma-dedicated LUT: *ImplicitLUT$_Y$* using *sizeIdx* and *modeIdx.* Otherwise, at 2040, the *trPair* is derived from the chroma-dedicated LUT: *ImplicitLUT$_{CbCr}$* using *sizeIdx* and *modeIdx.* At 2060, inverse transform is applied to the transform block using the derived *trPair* to obtain the residuals for the current block. At 2070, the current block is reconstructed using the reconstructed residuals after inverse transform and a prediction block of the current block obtained for example using the intra prediction mode of the current block.

On the encoding side, at 2015, a residual block for a current block to encode is obtained. The residual block is for example obtained as the difference between the current block and the prediction of the current block by the intra prediction mode determined for the current block. In a similar manner as in the decoding side, at 2020, the component ID *compID* of the block, *sizeIdx and modeIdx* are obtained. At 2030, it is checked whether the block is luma or not. If the block is luma (i.e., *compID = Y*), at 2050, the *trPair* is derived from the luma-dedicated LUT: *ImplicitLUT$_Y$* using *sizeIdx* and *modeIdx.* Otherwise, at 2040, the *trPair* is derived from the chroma-dedicated LUT: *ImplicitLUT$_{CbCr}$* using *sizeIdx* and *modeIdx.* At 2045, the *trPair* is then used to perform the transform step to obtain the transformed coefficients from the residuals for the current block. A secondary transform may eventually be performed on the transformed coefficient. At 2055, the transform block is encoded.

In a variant of this embodiment, if the length of the block in one direction (width or height) is less than a given length L (e.g., the width or the height of the block is less than 4, with L=4), DCT2 is used as a transform in that direction, i.e., the horizontal or vertical transform is DCT2 if the width or the height is lower than L, respectively.

In another variant, a picture parameter set (PPS) or a sequence parameter set (SPS) flag ImplicitMTSchroma_flag is signaled in the bitstream to indicate whether implicit MTS with LUT-based derivation is used for chroma.

## Adaptation of LUT-based implicit MTC to non-CCP modes

Cross-component prediction is a tool that allows generating the prediction of the chroma component based on the reconstructed luma samples. In that case, the characteristics of the chroma residual samples are not directly correlated to the directionality of the block. Then, the optimal transform used for this kind of block may be different than the one used for conventional directional intra modes.

In this embodiment, it is proposed to introduce special rules dedicated to CCP blocks.

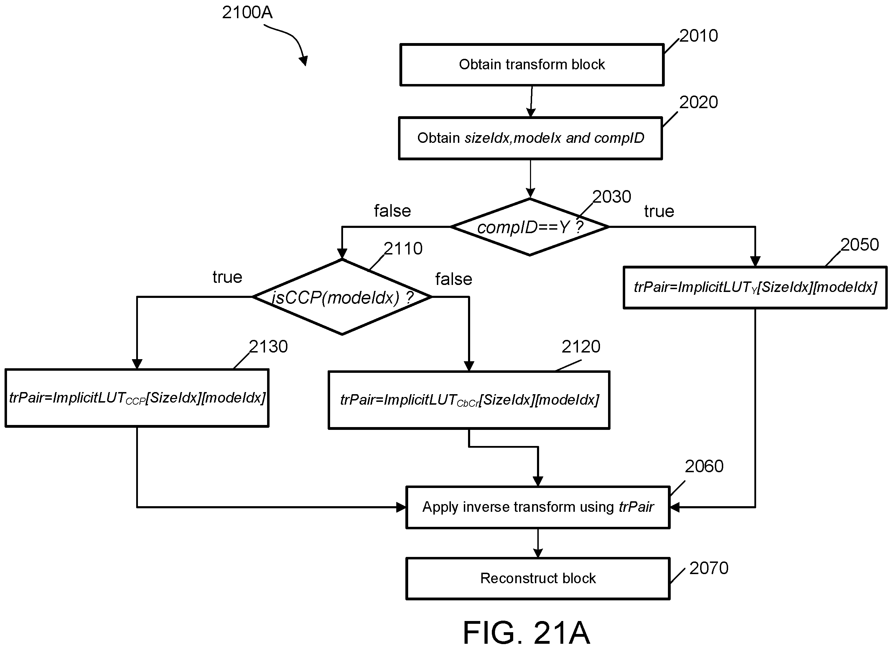

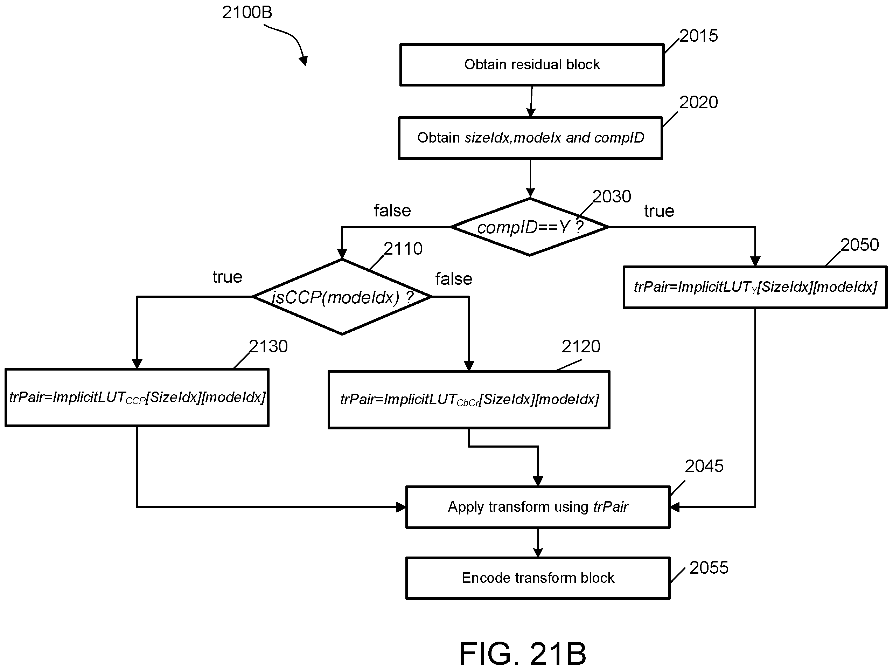

Specifically, it is proposed to add an additional LUT dedicated to CCP blocks, denoted as ImplicitLUT$_{CCP}$. The process of using a LUT dedicated to CCP modes for LUT-based implicit MTS is illustrated in FIG.21A and FIG. 21B. The process of FIG. 21B can be used in the encoding method described in relation with FIG. 2. The process of FIG. 21A can be used in the decoding method described in relation with FIG. 3.

Method 2100A is similar to the decoding method described with FIG. 20A and method 2100B is similar to the encoding method described with FIG. 20B, except for the following steps: If at 2030, it is determined that the component of the block is not luma. At 2110, it is checked if the intra prediction mode for the block is a CCP mode. If the intra prediction mode is a CCP mode, at 2130, the trPair is derived from the CCP-dedicated LUT ImplicitLUT$_{CCP}$. Otherwise (the intra prediction mode is not a CCP mode), at 2120, the trPair is derived from the ImplicitLUT$_{CbCr}$.

In a variant, the fusion of chroma intra prediction modes is also considered as a CCP mode. Therefore, on FIG. 21A and FIG. 21B at 2110, *isCCP* is true if the current block is a fusion of chroma intra prediction modes.

In another variant of this embodiment, if the current chroma block is predicted with CCP, DCT2 is used for the current chroma block. Therefore, in this variant, trPair=DCT2 at 2130 of FIG. 21A and FIG. 21B.

In another variant, if the current chroma block is predicted with CCP, the planar *modeIdx* is used for the current chroma block. So, at 2130 of FIG. 21A and FIG. 21B, trPair= ImplicitLUT$_{CbCr}$[sizeIdx][0].

In another variant, if the current chroma block is predicted with CCP, a VIPM is computed on the reconstructed chroma neighboring pixels to be used as modeIdx for the current chroma block.

In another variant, if the current chroma block is predicted with CCP, a default implicit MTS is used for the current chroma block: where horizontal transform trPair$_{Hor}$ of the transform pair and vertical transform trPair$_{Ver}$ of the transform pair are derived at 2130 of FIG. 21A and FIG. 21B based on block height nTbH or width nTbW as follows:

$$\text{trPair}_{\text{Hor}} = (\ nTbW >= 4\ \&\&\ nTbW <= 16\ )\ ?\ \text{DST7} : \text{DCT2},$$

and

$$\text{trPair}_{\text{Ver}} = (\ nTbH >= 4\ \&\&\ nTbH <= 16\ )\ ?\ \text{DST7} : \text{DCT2}$$

In another variant, the mode index of the luma component modeIdxy is inherited if the chroma block is predicted with CCP. In that case, trPair is obtained by trPair= ImplicitLUT$_{CCP}$ [sizeIdx][ modeIdx$_Y$] at 2130 of FIG. 21A and FIG. 21B.

In another variant, explicit MTS is performed if the chroma block is predicted with CCP modes. In this case, a dedicated MTS index is transmitted for CCP modes.

In another variant, an SPS or PPS flag ImplicitMTS$_{CCP}$_flag is signaled to indicate if LUT-based implicit MTS dedicated to chroma blocks predicted with CCP modes is performed for these blocks. In another variant, a specific SPS or PPS flag MTS$_{CCP}$_flag is transmitted to indicate if explicit MTS is performed for chroma blocks predicted with CCP modes.

The LUT ImplicitLUT$_{CbCr}$ dedicated to chroma blocks and the LUT ImplicitLUT$_{CCP}$ dedicated chroma blocks predicted with CCP modes can be derived using a similar training as described in relation with FIG. 9 considering only the chroma components of the blocks.

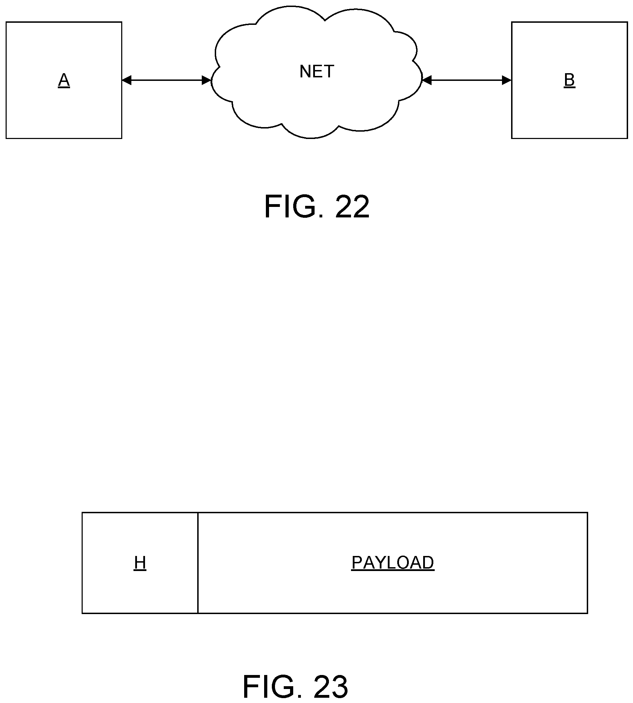

In an embodiment, illustrated in FIG. 22, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 23 shows an example of the syntax of a signal transmitted over a packet-based transmission protocol. Each transmitted packet P comprises a header H and a payload PAYLOAD. In some embodiments, the payload PAYLOAD may comprise coded data representative of a video encoded according to any one of the embodiments described above. The payload can also comprise any signaling as described above. For example, the signal comprises any one of a flag ImplicitMTSchroma_flag signaled at picture level or sequence level indicating if LUT-based implicitMTS for chroma is used, a flag ImplicitMTS$_{CCP}$_flag signaled at picture level or sequence level indicating if LUT-based implicitMTS dedicated to CCP modes is for chroma blocks predicted with CCP, or a flag MTS$_{CCP}$_flag signaled at picture level or sequence level indicating if explicitMTS is used for chroma blocks predicted with CCP and transform index signaled at block level for these chroma blocks.

One or more embodiments provide a computer program comprising instructions which when executed by one or more processors cause such processors to perform the encoding and/or decoding methods according to any of the embodiments described above.

One or more embodiments also provide a computer readable storage medium having stored thereon instructions for encoding or decoding video data according to the methods described above. One or more embodiments provide a computer readable storage medium having stored thereon video data generated according to the methods described above. One or more embodiments also provide a method and apparatus for transmitting or receiving video data generated according to the methods described above.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the transform and inverse transform modules (225, 250, 350), of a video encoder 200 and decoder 300 as shown in FIG. 2 and FIG. 3. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

**1.** A method of video decoding, comprising:

selecting a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair;

inverse transforming transform coefficients of said component of the current block based on said single transform pair to obtain residuals; and

decoding said component of the current block based on said residuals.

2. A method of video encoding, comprising:

selecting a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair;

obtaining residuals for said component of the current block;

transforming said residuals for said component of the current block to obtain transform coefficients of said component of the current block based on said single transform pair; and

encoding said component of the current block based on said transform coefficients.

3. An apparatus for video decoding, comprising at least a memory and one or more processors, wherein said one or more processors are configured to:

select a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair;

inverse transform coefficients of said component of the current block based on said single transform pair to obtain residuals; and

decode said component of the current block based on said residuals.

4. An apparatus for video encoding, comprising at least a memory and one or more processors, wherein said one or more processors are configured to:

select a single transform pair from a plurality of transform pairs for a component of a current block, wherein said selecting is based on a look up table associated with the component, wherein the look up table indicates a mapping between (1) an intra prediction mode and a transform unit size associated with the component of the current block and (2) said single transform pair;

obtain residuals for said component of the current block;

transform said residuals for said component of the current block to obtain transform coefficients of said component of the current block based on said single transform pair; and

encode said component of the current block based on said transform coefficients.

5. The method of claim 1 or 2, or the apparatus of claim 3 or 4, wherein the look up table associated with the component is identified using an identifier of the component.

6. The method of claim 1, 2 or 5, or the apparatus of claim 3, 4 or 5, wherein a first look up table is associated with a luma component and a second look up table is associated with chroma components.

7. The method of any one of claims 1, 2 or 5-6, or the apparatus of any one of claims 3-6, wherein said plurality of transform pairs includes a pair of transforms, which includes a DCT2 transform and another trigonometric transform.

8. The method of any one of claims 1, 2 or 5-7, or the apparatus of any one of claims 3-7, wherein the transform unit size associated with the component of the current block is selected from a plurality of transform unit sizes that includes all possible TU sizes except TU sizes having at least one of a width or height lower than a given length.

9. The method of claim 1 or 2, or the apparatus of claim 3 or 4, wherein responsive to determining that the component is a chroma component, selecting the single transform pair comprises selecting the look up table among two look up tables based on determining whether the intra prediction mode associated with the component is a cross-component prediction mode or not, wherein one of the two look up tables is associated with cross-component prediction modes and the other of the two look up tables is associated with other intra prediction modes for chroma component.

10. The method or the apparatus of claim 9, wherein a fusion of chroma intra prediction modes is a cross-component prediction mode.

11. The method or the apparatus of claim 9 or 10, wherein the look up table associated with cross-component prediction modes comprises a single transform pair DCT2.

12. The method of claim 1 or 2, or the apparatus of claim 3 or 4, wherein responsive to determining that the component is a chroma component and that the intra prediction mode associated with the component of the current block is a cross-component prediction mode, the single transform pair is selected in the look up table associated with the component based on an intra prediction mode being either a PLANAR mode, a virtual intra prediction mode determined on reconstructed chroma neighboring pixels of the current block or an intra prediction mode of a luma component of the current block.

13. The method of claim 1 or 2, or the apparatus of claim 3 or 4, wherein for chroma component of current block, selecting the single transform pair is responsive to determining that the intra prediction mode associated with the chroma component of the current block is not a cross-component prediction mode, and wherein when the intra prediction mode associated with the chroma component of the current block is a cross-component prediction mode, the single transform pair is selected either in a set of transform pairs using a decoded index indicating a transform pair among the set of transform pairs or among two transforms in each direction based on a width and a height of the chroma component of the current block.

14. The method of claim 1, further comprising decoding a flag signaled in a bitstream at a picture level or sequence level and indicating that implicit multiple transform set is used from the chroma component.

15. The method claim 9 or 13, further comprising decoding at least one of a flag signaled in a bitstream at a picture level or sequence level and indicating that implicit multiple transform selection is used for cross-component prediction mode or a flag signaled in a bitstream at a picture level or sequence level and indicating that explicit multiple transform selection is used for cross-component prediction mode.

FIG. 1

FIG. 2

300

| 330 | 335 | 340 | 350 |
|---|---|---|---|
| Entropy Decoding | Partitioning | Inverse Quantization | Inverse Transform |

355

370

Intra Prediction

360

Motion Compensation —375

365— In-loop Filters

385

Post-decoding Processing

380

Reference Picture Buffer

FIG. 3

FIG. 4

FIG. 5

FIG. 6

FIG. 7

Obtain the transformed coefficients — 810

Get the transform pair at index (*intra mode, TU size*) in the LUT — 820

Apply inverse transform — 830

Reconstruct the residuals — 840

FIG. 8

FIG. 9

FIG. 10

FIG. 11

FIG. 12

FIG. 13

EP 4 727 122 A1

| 1 | 0 | -1 | | 1 | 2 | 1 | | 2 | 1 | -1 | | -1 | 1 | 2 |
| 1 | 0 | -1 | | -1 | -2 | -1 | | 1 | -1 | -2 | | -2 | -1 | 1 |

**FIG. 14**

$L_0$   $L_1$   $L_2$

$C$

$L_3$   $L_4$   $L_5$

**FIG. 15**

| NW | N | NE |
| W | C | E |
| SW | S | SE |

**FIG. 16**

H

| 1 | 2 | 1 |
| 1 | 2 | 1 |

(C)

G1

| 1 | 0 | -1 |
| 1 | 0 | -1 |

(C)

G2

| 1 | 2 | 1 |
| -1 | -2 | -1 |

(C)

G3

| -1 | 1 | 2 |
| -2 | -1 | 1 |

(C)

FIG. 17

1/16

| 1 | 1 | 1 |
| 1 | 8 | 1 |
| 1 | 1 | 1 |

FIG. 18

1900A

Obtain transform block — 1910

Obtain *sizeIdx,modeIx* — 1920

*trPair=ImplicitLUT[SizeIdx][modeIdx]* — 1930

Apply inverse transform using *trPair* — 1940

Reconstruct block — 1950

## FIG. 19A

1900B

Obtain residual block — 1915

Obtain *sizeIdx,modeIx* — 1920

*trPair=ImplicitLUT[SizeIdx][modeIdx]* — 1930

Apply transform using *trPair* — 1945

Encode transform block — 1955

## FIG. 19B

2000A

2010
Obtain transform block

2020
Obtain *sizeIdx,modeIx and compID*

2030
*compID==Y ?*

false — true

2040
*trPair=ImplicitLUT$_{CbCr}$[SizeIdx][modeIdx]*

2050
*trPair=ImplicitLUT$_Y$[SizeIdx][modeIdx]*

2060
Apply inverse transform using *trPair*

2070
Reconstruct block

## FIG. 20A

2000B

2015
Obtain residual block

2020
Obtain *sizeIdx,modeIx and compID*

2030
*compID==Y ?*

false — true

2040
*trPair=ImplicitLUT$_{CbCr}$[SizeIdx][modeIdx]*

2050
*trPair=ImplicitLUT$_Y$[SizeIdx][modeIdx]*

2045
Apply transform using *trPair*

2055
Encode transform block

## FIG. 20B

EP 4 727 122 A1

2100A

2010
Obtain transform block

2020
Obtain *sizeIdx,modelx and complD*

2030
false ← *complD==Y ?* → true

2110
true ← *isCCP(modeldx) ?* → false

2050
*trPair=ImplicitLUT$_Y$[SizeIdx][modeldx]*

2130
*trPair=ImplicitLUT$_{CCP}$[SizeIdx][modeldx]*

2120
*trPair=ImplicitLUT$_{CbCr}$[SizeIdx][modeldx]*

2060
Apply inverse transform using *trPair*

2070
Reconstruct block

FIG. 21A

2100B

Obtain residual block — 2015

Obtain *sizeIdx, modelx and compID* — 2020

compID==Y ? — 2030

true → $trPair=ImplicitLUT_Y[SizeIdx][modeldx]$ — 2050

false → isCCP(modeldx) ? — 2110

true → $trPair=ImplicitLUT_{CCP}[SizeIdx][modeldx]$ — 2130

false → $trPair=ImplicitLUT_{CbCr}[SizeIdx][modeldx]$ — 2120

Apply transform using *trPair* — 2045

Encode transform block — 2055

FIG. 21B

EP 4 727 122 A1

A ↔ NET ↔ B

# FIG. 22

| H | PAYLOAD |
|---|---------|

# FIG. 23

Europäisches Patentamt

European Patent Office

Office européen des brevets

# EUROPEAN SEARCH REPORT

**Application Number**

EP 24 30 6652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/003115 A1 (INTERDIGITAL CE PATENT HOLDINGS SAS [FR]) 4 January 2024 (2024-01-04) * paragraphs [0117] - [0132], [0140] - [0151]; figure 6 * ----- | 1-15 | INV. H04N19/122 H04N19/159 H04N19/176 H04N19/186 H04N19/593 |
| X | BONNINEAU (INTERDIGITAL) C ET AL: "AHG12: Improved implicit MTS", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0223 15 July 2024 (2024-07-15), XP030320607, Retrieved from the Internet: URL:https://jvet-experts.org/doc_end_user/ documents/35_Sapporo/wg11/JVET-AI0223-v3.z ip JVET-AI0223-v3.docx [retrieved on 2024-07-15] * section 2 * ----- | 1-15 | |
| X | "Algorithm description of enhanced compression model 13 (ECM 13)", 146. MPEG MEETING; 20240422 - 20240426; RENNES; (MOTION PICTURE EXPERT GROUP OR ISO/IEC JTC1/SC29/WG11), , no. n23774 7 July 2024 (2024-07-07), XP030319997, Retrieved from the Internet: URL:https://dms.mpeg.expert/doc_end_user/d ocuments/146_Rennes/wg11/MDS23774_WG05_N00 294.zip WG5_N0294_JVET-AH2025-v1-ECM.docx [retrieved on 2024-07-07] * section 3.3.4 * ----- -/-- | 1-15 | TECHNICAL FIELDS SEARCHED (IPC) H04N |

The present search report has been drawn up for all claims

| Place of search | Date of completion of the search | Examiner |
|---|---|---|
| Munich | 25 February 2025 | Montoneri, Fabio |

EPO FORM 1503 03.82 (P04C01)

Europäisches
Patentamt

European
Patent Office

Office européen
des brevets

# EUROPEAN SEARCH REPORT

**Application Number**

EP 24 30 6652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/083090 A1 (DOUYIN VISION CO LTD [CN]; BYTEDANCE INC [US]) 25 April 2024 (2024-04-25) * pages 67, 68 * ----- | 1-15 | |
| A | BROSS B ET AL: "Versatile Video Coding (Draft 10)", 131. MPEG MEETING; 20200629 - 20200703; ONLINE; (MOTION PICTURE EXPERT GROUP OR ISO/IEC JTC1/SC29/WG11), , no. m54716 4 September 2020 (2020-09-04), XP030293002, Retrieved from the Internet: URL:https://dms.mpeg.expert/doc_end_user/d ocuments/131_Teleconference/wg11/m54716-JV ET-S2001-v17-JVET-S2001-vH.zip JVET-S2001-vH.docx [retrieved on 2020-09-04] * sections 7.4.3.4, 8.7.4.1 * ----- | 1-15 | |

TECHNICAL FIELDS
SEARCHED    (IPC)

The present search report has been drawn up for all claims

| Place of search | Date of completion of the search | Examiner |
|---|---|---|
| Munich | 25 February 2025 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 6652

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | | Publication date |
|---|---|---|---|---|
| WO 2024003115 A1 | 04-01-2024 | TW | 202404357 A | 16-01-2024 |
| | | WO | 2024003115 A1 | 04-01-2024 |
| WO 2024083090 A1 | 25-04-2024 | NONE | | |

EPO FORM P0459

For more details about this annex : see Official Journal of the European Patent Office, No. 12/82